# EUROPEAN PATENT APPLICATION

(11) **EP 2 336 732 A1**
(43) Date of publication of application: **22.06.2011**
(21) Application number: 09179317.4
(22) Date of filing: 15.12.2009
(51) Int. Cl.: G01F 1/66, G01F 1/708, G01F 15/14

(54) **Consumption Meter with Flow Part and Housing Formed by a Monolithic Polymer Structure**

(71) Applicant: KAMSTRUP A/S, 8660 Skanderborg (DK)
(72) Inventor: Laursen, Peter Schmidt, DK-8660, Skanderborg (DK); Nielsen, Søren Tønnes, DK-8355, Solbjerg (DK)
(74) Representative: Plougmann & Vingtoft A/S

(57) **Abstract**

A consumption meter for measuring a consumed quantity of a physical entity, e.g. a consumed amount of water. The meter includes a monolithic polymer structure (1, 5) with a flow passage part (2) for fluid flow and a cavity (6) separated from the flow passage part (2). The cavity (6) houses one or more ultrasound transducers (8), a measurement circuit (9) connected to the ultrasound transducer (8) to allow measurement of a flow rate of the fluid flowing through the through-going opening (2), and a calculation circuit (9) arranged to calculate the consumed quantity of the physical entity based on the flow rate. Preferably, the flow passage part (2) has threaded portions in both ends to allow connection to a piping installation. A display (10) may also be housed within the cavity (6), e.g. visible through a transparent cover serving to provide a watertight enclosure together with the cavity. Preferably, two transducers (8) are positioned inside the cavity (6) and operate through a wall (1) of the monolithic polymer structure separating the flow passage part (2) and the cavity (6), i.e. according to the matching layer principle. The flow passage part (2) may be arranged to receive a measuring tube element and an ultrasound reflector arrangement.

## Description

### FIELD OF THE INVENTION

The invention relates to the field of consumption meters such as a heat meter, a cooling meter, a water meter, or a gas meter. More specifically, the invention relates to a consumption meter comprising an ultrasound flow meter. Especially, the invention relates to an ultrasound consumption meter with a combined flow part and casing formed by a monolithic polymer structure. Further, the invention provides a method of manufacturing a consumption meter.

### BACKGROUND OF THE INVENTION

Ultrasound based consumption meters for calculating a consumed quantity of water, heat, cooling, gas or the like, typically has a flow part of metal with a through-going opening forming a flow passage. Typically, the flow part has threaded ends for connection to a piping system. A compartment or housing part with a cavity for housing necessary electronic components is then attached to the metal flow part. The housing part serves to protect measuring circuits for controlling the ultrasound transducer(s), as well as calculation circuit for calculating the consumed quantity, and a display for displaying a value representing the consumed quantity. The housing part may in its cavity further include a battery for powering the electronic components. Further features, such as a radio communication module, may also be present inside the housing. The ultrasound transducer(s) is/are mounted watertight or gastight to the flow part, and electrically connected to the measuring circuit.

EP 1 983 311 and EP 2 083 250 both show examples of an ultrasound-based water meter with a generally cylindrical polymer housing part mounted onto a pressure carrying metal flow part with threaded ends for connection to a piping system. A transparent top lid serves to cover the opening to the cavity in the housing part where the electronic components, battery and display are placed. To protect the electronics inside the housing against damaging humidity, EP 1 983 311 describes various water resistive materials are described which can serve to encapsulate the sensitive components.

### SUMMARY OF THE INVENTION

It may be seen as a problem with existing ultrasound consumption meters that they are complicated to manufacture, and are thus not suited for low cost manufacturing. The reason is that a large number of manufacturing steps are required because separate processes are required to form the metal flow part and the polymer housing part, and during final assembly, the two parts require a separate step of being attached to or connected to each other. This problem is eliminated or at least reduced by the invention.

In a first aspect, the invention provides a consumption meter arranged to measure a consumed quantity of a physical entity, such as a consumed amount of water, the meter including
- a monolithic polymer structure having a through-going opening arranged for passage of a fluid, and a cavity separated from the through-going opening, wherein the cavity is arranged for at least partly housing
   - at least one ultrasound transducer,
   - a measurement circuit operationally connected to the at least one ultrasound transducer so as to allow measurement of a flow rate of the fluid flowing through the through-going opening, and
   - a calculation circuit arranged to calculate the consumed quantity of the physical entity based on the flow rate.

Such consumption meter can be designed with a reduced number of single components required compared to existing meters, due to the monolithic polymer structure forming a combined pressure carrying flow part and housing part for the moist sensitive components of the meter. Thus, such combined structure can be cast where one single monolithic polymer element serves the same function as prior art consumption meters, where a polymer housing and a metal flow part are attached to each other. Only one single process is required to manufacture the monolithic polymer structure, preferably a casting process, and the step of attaching the housing part to the flow part is eliminated. Furthermore, only one watertight fitting is necessary to provide a watertight sealing of the electronic equipment, since the monolithic polymer element provides a sealing between the flow and the cavity where the electronic equipment can be placed, thus requiring only an additional watertight sealing of the opening to the cavity necessary for providing a watertight enclosure for the electronic equipment. Altogether, the consumption meter according to the invention is highly suited for automated low cost manufacturing. At the same time, the resulting meter becomes more reliable in function, since it contains fewer components.

By the term "at least partly housing" is understood that a part of the transducer, the measurement circuit or the calculation circuit may project outside an opening of the cavity, whereas the remaining enclosure housing the mentioned elements is provided by a cover part or the like. However, most preferably the cavity formed by the monolithic polymer structure is large enough to fully house all of these elements, and thus all of these elements are preferably fully contained inside a space defined by the cavity and a plane covering the opening to the cavity.
It is to be understood that even though the monolithic polymer structure preferably protects the sensitive electronic components from damage or tampering, as well as it constitutes a barrier between the sensitive components and the fluid pressure, other materials than the polymer material forming the monolithic structure can be used for various parts of the meter. E.g. special coatings or foils can be used to increase the resistivity against humidity penetrating through the polymer into the cavity and thus potentially damages the sensitive components inside the cavity. However, still in such embodiments, the monolithic polymer structure forms the primary barrier against humidity and tampering, and the through-going opening serves as pressure carrying element even though a separate measuring tube element may be inserted in the through-going opening if a special shape of the measuring tube is desired. However, the inner side of the through-going opening can also be formed, e.g. casted, into a suitable shape such that the inner side of the through-going opening forms a measuring tube, thus making a separate measuring tube element superfluous.

It is to be understood that both the flow passage and the cavity can have various shapes. Especially, the part forming the cavity may be shaped such that the required space for the mentioned components is present, and an opening to the cavity serves for the components to enter during manufacturing, and further this opening is preferably shaped so as to fit a matching cover, thus forming together with such cover an enclosure in which the ultrasound transducer(s), the measurement circuit, and the calculation circuit are arranged. Said enclosure may be formed watertight, if desired. Especially, the monolithic polymer structure may be formed with a part of its surface shaped so as to engage with the cover or another part, in order to lock the cover in position onto the monolithic polymer structure, when mounted for normal operation. Such part of the surface may be in the form of protrusion or indentations on an outer or inner surface part of the monolithic polymer structure serving for mutual engagement with corresponding parts of the cover or a locking ring or the like serving to keep the cover in place. In a special embodiment, the monolithic polymer structure has a threading part serving for such mutual engagement.

Preferably, the monolithic polymer structure is pressure-carrying and thus the inside of the through-going opening is in contact with the fluid, unless the inner side of the through-going opening is covered by a cover material serving to protect the monolithic polymer structure from direct fluid contact. Thus, the monolithic polymer structure is preferably formed by a polymer material with at least a controlled degree of fluid permeability, such as a controlled degree of water permeability in case of a water meter, a heat meter or a cooling meter.

Since the through-going opening preferably serves as pressure carrying element and is arranged for direct connection to a piping system, the monolithic polymer structure should be formed of a proper polymer material and shaped such that it is capable of withstanding the mechanical load, especially shear load, that may occur when the structure is mounted in a piping installation. Especially, the polymer material may be a composite material, i.e. based on a polymer and another type of material, such as carbon, glass or the like. However, it may especially be preferred that the polymer material is substantially watertight and is strong enough to provide a structure that does not break due to mechanical forces applied to the structure when it is rigidly mounted in a piping installation. Preferred polymer materials are: PPS, PES, PPE, a PS compound, or PA12.

In preferred embodiments, the at least one ultrasound transducer is arranged to transmit ultrasound signals through a wall of the monolithic polymer structure separating the through-going opening and the cavity. Especially, the wall may form a substantially water-tight barrier between the through-going opening and the cavity. Such embodiment utilize the so-called matching layer principle, where the ultrasound transducer(s) transmit ultrasound signals in the fluid inside the through-going opening through the polymer wall of the through-going opening and not through a hole in the flow part. This eliminates the need for an opening between the flow part and the cavity and makes parts for watertight or gastight sealing superfluous. In such embodiments, the monolithic polymer structure can be formed very simple, and the matching layer principle further enables integration of transducers and measuring circuit inside the cavity.

The meter preferably comprises a cover arranged to fit to an opening to the cavity, thus such cover can serve to provide, together with the monolithic polymer structure, an enclosure around the cavity. Especially, the cover may have at least a transparent zone arranged such in relation to a position of a display inside the cavity such that the consumed quantity can be displayed visible by the display, when the cover is mounted for normal operation. Hereby, it is possible to manufacture the monolithic polymer structure in a non-transparent material, whereas the cover serves the purpose of making the display readable from outside. Preferably, the cover is arranged to provide a substantially water-tight sealing of the opening to the cavity when mounted for normal operation, such as sealed by means of a sealing material. Especially, moist inhibiting means is arranged inside the cavity, such as in the form of a material cast around at least part of the measurement circuit and/or the calculation circuit being, or such as a moist inhibiting gas, or such as a moist absorbing gel. The electronic parts may also be cast into a sealing material, e.g. as disclosed in EP 1 983 311. Hereby, the life-time of the electronic components can be prolonged, also in case of water meters or cooling meters where humidity is a problem.

Some embodiments comprise an ultrasound reflector arrangement inside the through-going opening, thus allowing two ultrasound transducers arranged outside the through-going opening to intercommunicate by means of the ultrasound reflector arrangement.

A measuring tube element may be arranged inside the through-going opening, thus allowing special shaping of this element forming the measuring tube. Hereby it is possible to replace the measuring tube element and e.g. select a measuring tube element with a desired inner diameter. Alternatively, an inside of the through-going opening of the monolithic polymer structure defines the measuring tube, thus eliminating the need for a separate measuring tube element.

The monolithic polymer structure may have a protrusion or indentation inside the through-going opening serving to engage with a measurement tube element or an ultrasound reflector arrangement, thereby allowing easy mounting and precise positioning of the measurement tube element and/or ultrasound reflector arrangement.

Preferably, both ends of the through-going opening of the monolithic polymer structure are arranged for connection to a piping system. This can be achieved by both ends of the through-going opening having threaded portions, either on its inner or outer surface. Alternatively, both ends of the through-going opening are shaped to engage with a metal part which is shaped for fitting to the piping system.

The cavity may further house additional components. Especially, such additional components may include a Radio Frequency (RF) transmitter arranged to transmit a R F signal with data representing the consumed quantity. Especially, such RF signal may be in a wireless form.

The meter may comprise a temperature sensor mounted so as to sense a temperature of the fluid inside the through-going opening. Especially, such temperature sensor may be mounted by means of a metal pocket cast into the monolithic polymer structure.

The monolithic polymer structure may be shaped such that a part of the cavity provides an elongated space along the through-going opening, and wherein at least one battery for driving at least the measurement circuit and the calculation circuit is arranged inside this elongated space, thus allowing the meter to function without further electric power supply. Especially, the cavity contains two such elongated spaces symmetrically arranged around the through-going opening, thus allowing two batteries to be housed in the cavity.

A substantially watertight electrical connector may be arranged so as to establish electrical connection to the cavity from outside. Especially, the electrical connector may establish electrical connection to the cavity from outside through a wall of the monolithic polymer structure. However, the electrical connection may also be established through a cover covering an opening to the cavity. The electrical connector may serve to supply electric power to one or more electric power consuming elements arranged in the cavity from outside, and/or the electrical connector may serve to transfer data between a circuit arranged in the cavity and the outside, e.g. the electrical connector may be connected to the calculation circuit for communication of the consumed quantity.

The consumption meter may be a heat meter, a cooling meter, a water meter, or a gas meter.

In a second aspect, the invention provides a method of manufacturing a consumption meter arranged to measure a consumed quantity of a physical entity, such as an amount of water, the method comprising
- forming, such as casting, a monolithic polymer structure having a through-going opening and a cavity separated from the through-going opening,
- mounting in the cavity:
   - at least one ultrasound transducer operationally connected to a measurement circuit so as to measure a flow rate, and
   - a calculation circuit arranged to calculate the consumed quantity of the physical entity based on the flow rate.

Preferably, the method comprises mounting a cover, such as lid, onto the monolithic polymer structure so as to provide a substantially water-tight sealing of an opening to the cavity. Especially, the method comprises placing a moist exhibiting means into the cavity.

It is appreciated that the same advantages and equivalent embodiments apply for the second aspect as mentioned for the first aspect.

### BRIEF DESCRIPTION OF THE DRAWINGS

Embodiments of the invention will be described, by way of example only, with reference to the drawings, in which
Fig. 1 illustrates a section view sketch of a simple consumption meter embodiment,
Figs. 2-4 illustrate different views of a water meter embodiment,
Figs. 5-7 illustrate different views of still another water meter embodiment, and
Figs. 8 and 9 illustrate different views of yet another water meter embodiment.

### DESCRIPTION OF EMBODIMENTS

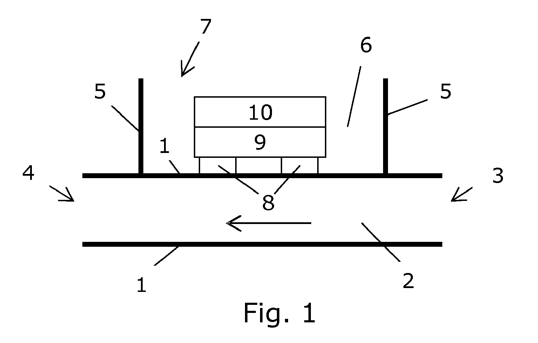

Fig. 1 shows a section view sketch of a simple consumption meter embodiment. The monolithic polymer structure is indicated by the bold black lines. A first wall 1 of this structure forms a flow passage 2 in the form of a through-going opening between openings 3 and 4. This first wall 1 preferably has a circular cross section, at least towards the ends 3, 4 so as to fit in size to connecting piping. Second walls 5 form a cavity 6 with an opening 7. In this embodiment the cavity 6 is formed by the second walls 5 together with part of the first walls 1.

The cavity 6 houses two ultrasound transducers 8, electronic components 9, 10 including at least a measurement circuit 9 connected to the ultrasound transducers 8 to measure a flow rate of fluid flowing through the through-going opening 2, and a calculation circuit 10 for calculating the consumed quantity based on the flow rate. Finally, the cavity 6 may house a display, such as an LCD display, arranged to display the consumed quantity so as to allow manual reading of the meter, however, it is to be understood that the display is optional. The meter may alternatively or additionally be arranged for remote reading, e.g. via a built-in radio communication module arranged for transmission of consumed quantity data represented in a wireless Radio Frequency signal. The second walls 5 can be shaped as desired to provide the necessary space in the cavity 6 for housing the mentioned elements.

As seen in the sketch of Fig. 1, the ultrasound transducers 8 are located outside the wall 1 separating the cavity 6 and the flow passage 2, thus the transducers operate according to the so-called matching layer principle which eliminates the need for a hole in the polymer wall 1 for the transducers. Thus, with a polymer wall 1 separating the flow passage 2 from the cavity 6, a significant barrier to the fluid in the flow passage 2 is provided without the need for any sealing means. If desired, depending on the type of polymer used for the monolithic structure, different coatings or the like can be used on the wall 1 to provide a more effective watertight or gastight barrier between the fluid in the flow passage 2 and the cavity 6. With transducers 8 operating according to the matching-layer principle, and with a battery for powering the electronic elements 9, 10, a very simple structure of the meter is provided which only requires a cover or lid to fit watertight to the opening 7 in order to provide an effective humidity sealing of the elements 8, 9, 10 inside the cavity 6.

It is understood that the monolithic polymer structure with the walls 1, 5 forming the through-going opening 2 and the cavity 6 can be shaped in many ways to suit limitations regarding outer dimensions and dimensions and shape of the components 8, 9, 10 to be housed inside the cavity.

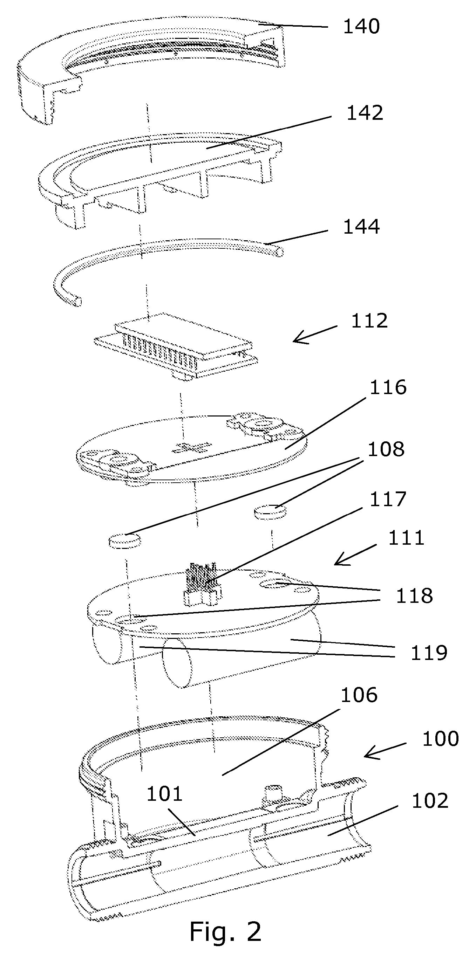

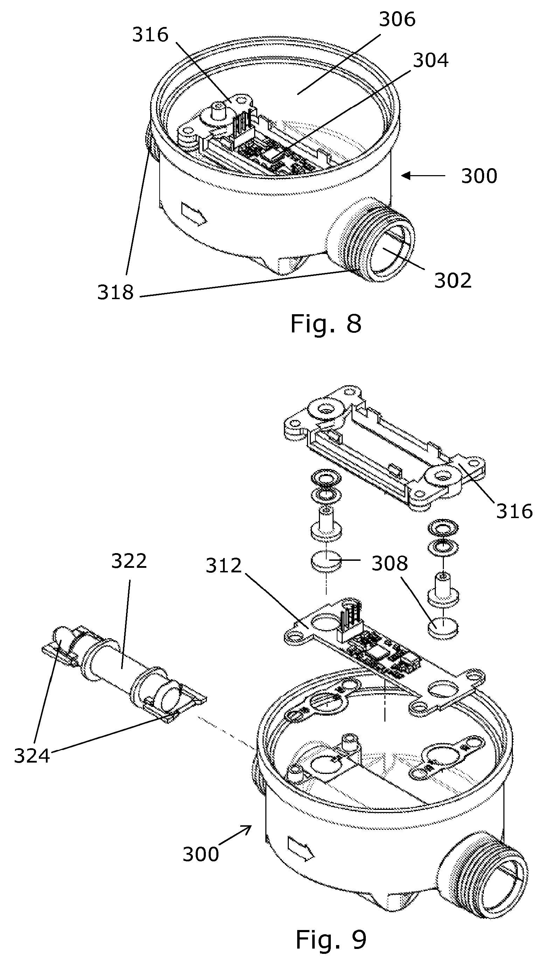

Fig. 2 illustrates an exploded view of a water meter embodiment. A housing is formed by a single element, namely a monolithic moulded polymeric structure 100 with a through-going opening forming a flow part 102 arranged for receiving a measuring tube element and a set of ultrasound reflectors. The flow part 102 has recesses on its interior surface arranged for receiving corresponding protrusions of a measuring tube and reflector arrangement (not shown, see Fig. 9). Threaded end parts on the flow part 102 serve for connection to a water piping installation. The housing further provides a cavity 106 for housing first and second units 111, 112 as well as two ultrasound transducers 108 arranged in matching openings 118 in the first circuit board of the first unit 111. These openings 118 serve to position the two ultrasound transducers 108 relative to each other, and also relative to the circuit board of the first unit 111.

The ultrasound transducers 108 are preferably (not shown) mechanically and electrically connected to the first circuit board of the first unit 111, and thereby to the measurement circuit disposed on the first circuit board, by means of fixing members, such as metal clips or solder, e.g. by means of soldering the transducers 108 to the first circuit board by means of Surface Mounting Technology. Thus, together with the ultrasound transducers 108, the first unit 111 forms a separate unit which can be tested before final assembly of the consumption meter. The first unit 111 includes batteries 119 attached to a bottom side of the first circuit board, while a first set of terminals 117 is attached an upper side of the first circuit board. The batteries 119 are attached so as to fit, when assembled, within the cavity 106 of the structure 100, on the sides of the flow part 102 enclosing the measuring tube.

A bracing element 116 is arranged for mounting on top of the first unit 111, with surfaces serving to press the transducers 108, when assembled, against surfaces of a wall 101 of the structure 100 separating the flow part 102 and the cavity 106. Through-going holes through the bracing element 116 and through the first unit 111 are suited for fastening these elements by means of screws (not shown) to corresponding mounting means formed in the structure 100, thus serving to seal the first unit 111, e.g. using lacquer to seal the screws, after mounting with the purpose of revealing any intrusion in the vital meter circuits, once it has been sealed from the manufacturer. Further, the bracing element 116 has a through-going hole allowing passage of the first set of terminals 117. The bracing element 116 can be formed by a printed circuit board, by a polymeric plate, e.g. formed in a pressure die casting process, or by a sheet of metal.

The second unit 112 has its display element on an upper side of the second circuit board, while a second set of terminals is arranged on a lower side of the second circuit board. A threaded top part 140 is arranged to press a top lid 142 with a transparent part in front of the display element together with the structure 100 which on its outer periphery has a corresponding thread. A flexible O-ring 144 serves to provide a water-tight enclosure between the top lid 142 and the opening of the cavity 106 in the structure 100, thereby providing a water-tight cavity 106 for the ultrasound transducers 108 and all electronic components of the first and second units 111, 112. The circuit boards of the first and second units 111, 112 have a general circular shape so as to fit the general circular shape of the housing. The second unit 112 may further include additional circuits, e.g. a radio communication unit for remote reading of the meter.

To allow easy manual reading of the display on the first unit 111 when the meter is installed in a piping system, the first set of terminals 117 is formed to engage with the second set of terminals on a lower side of the second unit 112 in different angles, namely 90° spaced. This allows different angular orientations of the display relative to the structure 100 of the meter.

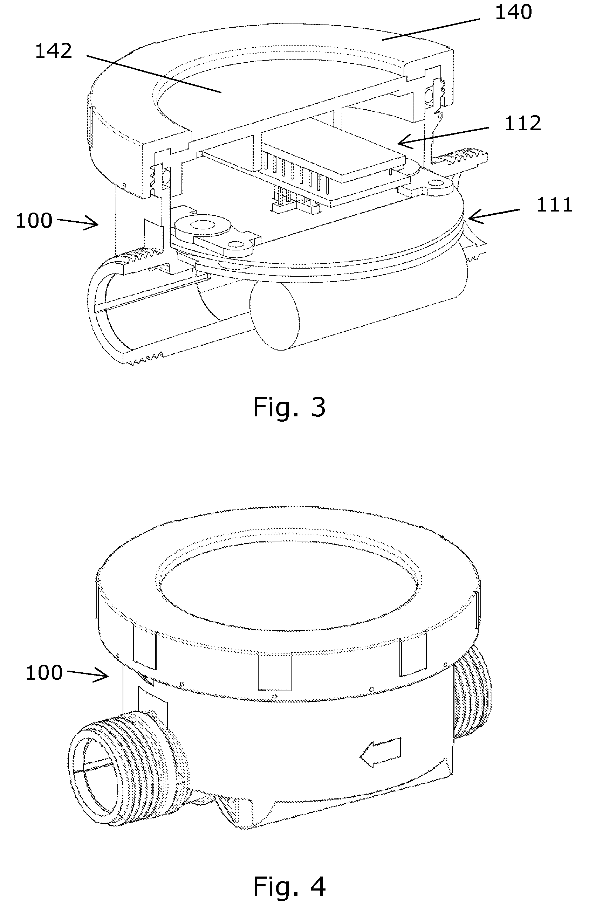

Fig. 3 illustrates a cut view of the water meter of Fig. 2 but in an assembled state with all of the first and second units 111, 112 within the cavity of the structure 100, and with the cavity being closed by the top lid 142 kept in place by the threaded top part 140. The second unit 112 is positioned on top of the first unit 111 with their respective second and first sets of terminals in engagement. A seal (not shown) can be provided by means of a wire seal with the wire going through a hole in the threaded top part 140 and around the piping or through a hole provided in a peripheral part of the structure 100, hereby allowing detection of any attempt to open the cavity 106 part of the structure 100.

Fig. 4 illustrates an outer view of the assembled water meter of Figs. 2 and 3.

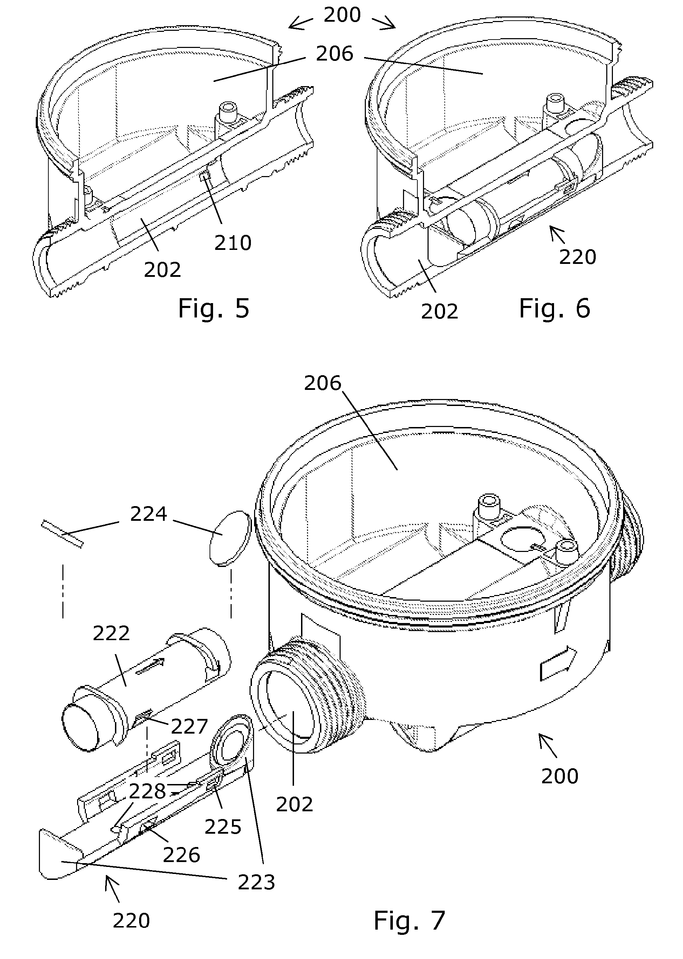

Figs. 5-7 illustrate different views of a water meter embodiment with a housing having the same outer shape as the embodiment of Figs. 2-4. However, the interior of the flow passage part 202 of the monolithic polymer structure 200 in Figs. 5-7 differs from that of Figs. 2-4 with respect to guiding and locking means for guiding and locking a reflector arrangement in position inside the flow passage. Again the matching layer principle is used, and thus there is a through-going wall of the monolithic polymer structure that separates the cavity 206 for housing the electronic components from the pressure carrying flow part 202. Indentions of this separating wall serve to indicate positions of the transducers and constitute plane surfaces for the transducers when mounted.

In Fig. 5 a cut away view of the flow passage 202 is seen, and here a small protrusion 210 formed at the inner surface of the flow passage 202 is visible. This protrusion 210 is arranged to engage with a corresponding hole 225 in the reflector and measuring tube arrangement 220 to provide a click lock or snapping function serving to lock the reflector arrangement 220 in position relative to the flow passage 202, once the reflector arrangement 220 has been inserted into the right position. Hereby, the meter can be assembled either by humans or by an assembly robot without the need for special tools for fastening the reflector arrangement 220 to the flow passage 202.

In Fig. 6 the same view as in Fig. 5 is show, however with a reflector and measuring tube arrangement 220 inserted in the flow passage 202 into the locked position where the reflectors are positioned right below indentions in the structure 200 arranged for position of the ultrasound transducers (not shown).

In Fig. 7 illustrates a perspective view of the monolithic polymer structure 200 and an exploded view of the single elements forming the reflector and measuring tube arrangement 220. The reflector holder arrangement 220 is preferably an injection moulded polymer structure with holders 223 in each end for ultrasound reflectors 224 which are preferably made of stainless steel. As seen, the reflector holders 223 are shaped with smooth surfaces in the fluid direction so as to reduce the amount of undesired turbulence in the fluid. The ultrasound reflectors 224 can be attached to the holders 223 by means of a snapping or clicking arrangement.

The measuring tube element 222, preferably made of polymer, is mounted on the reflector holder arrangement 220 by a snapping mechanism in the form of holes 226 in the reflector holder arrangement serving to engage with corresponding protrusions 227 on the side of the measuring tube element 222. Two pin shaped protrusions (not visible) on the measuring tube serve to engage with corresponding holes in the reflector holder arrangement, so as to help to fix the measuring tube element 222 relative to the reflector holder arrangement 220 in the fluid direction.

Figs. 8 and 9 show two views of yet another meter embodiment, where a monolithic polymer structure 300 forms a cavity 306 for housing ultrasound transducers 308, a printed circuit board 312 with electronic components 304 implementing measuring circuit for controlling the transducers 308 so as to measure a flow through the flow part of the meter 302, and a calculating circuit for calculating a consumed amount based on the measured flow.

Fig. 8 shows a perspective view of the embodiment with a monolithic polymer structure 300 with a pressure carrying flow part 302 adapted for fluid flow inside and with threaded end portions 318 suited for direct connection to a piping installation. A separate part or unit comprising a circuit board 312 with an electronic circuit 304 and piezoelectric ultrasound transducers 308 is formed. This unit 312, 304, 308 can be tested separately prior to final assembly of the meter.

The polymer structure 300 is monolithically formed in a die casting process and is enclosing a cavity 306 suited for containing the mentioned components. The mechanically separate unit comprising the transducers 308 and the circuit board 312 is clamped to the structure 300 with bracing 316. Each end of the structure 300 is provided with threading 318 in order to facilitate mounting onto adjacent pipelines. The electronic circuit 304 is provided with external connections in the form of pins enabling the electrical connection to other electronic circuits, such as calculator units, power supplies and telecommunication units. Alternatively, a wireless connection could be used.

Fig. 9 shows an exploded view of the embodiment where the single components are visible, including bracing 316, ultrasound transducers 308, circuit board 312. Furthermore, two ultrasound reflectors 324 are shown attached to a measuring tube element 322 with engagement arms. The measuring tube element 322 is preferably formed by polymer, while the reflectors and their engagement arms can be formed by polymer or metal, e.g. stainless steel. The transducers 308 are mounted in through-going holes in the circuit board 312. This helps to fix a position of the transducers 308 in relation to the circuit board 312, which is then fixed in position to the structure 300 by means of protrusions serving to engage with holes in the circuit board 312.

To sum up, the invention provides a consumption meter for measuring a consumed quantity of a physical entity, e.g. a consumed amount of water. The meter includes a monolithic polymer structure with a flow passage part for fluid flow and a cavity separated from the flow passage part. The cavity houses one or more ultrasound transducer, a measurement circuit connected to the ultrasound transducer to allow measurement of a flow rate of the fluid flowing through the through-going opening, and a calculation circuit arranged to calculate the consumed quantity of the physical entity based on the flow rate. Preferably, the flow passage part has threaded portions in both ends to allow connection to a piping installation. A display may also be housed within the cavity, e.g. visible through a transparent cover serving to provide a watertight enclosure together with the cavity. Preferably, two transducers are positioned inside the cavity and operate through a wall of the monolithic polymer structure separating the flow passage part and the cavity, i.e. according to the matching layer principle. The flow passage part may be arranged to receive a measuring tube element and an ultrasound reflector arrangement.

Although the present invention has been described in connection with preferred embodiments, it is not intended to be limited to the specific form set forth herein. Rather, the scope of the present invention is limited only by the accompanying claims.

In this section, certain specific details of the disclosed embodiments are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing significantly from the spirit and scope of this disclosure. Further, in this context, and for the purposes of brevity and clarity, detailed descriptions of well-known apparatus, circuits and methodology have been omitted so as to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims however the inclusion of the reference signs is only for clarity reasons and should not be construed as limiting the scope of the claims.

## Claims

1. A consumption meter arranged to measure a consumed quantity of a physical entity, such as a consumed amount of water, the meter including
- a monolithic polymer structure (1, 5) having a through-going opening (2) arranged for passage of a fluid, such as the through-going opening (2) being in contact with the fluid, and a cavity (6) separated from the through-going opening (2), wherein the cavity (6) is arranged for at least partly housing
- at least one ultrasound transducer (8),
- a measurement circuit (9) operationally connected to the at least one ultrasound transducer so as to allow measurement of a flow rate of the fluid flowing through the through-going opening, and
- a calculation circuit (10) arranged to calculate the consumed quantity of the physical entity based on the flow rate.

2. Consumption meter according to claim 1, wherein the at least one ultrasound transducer (8) is arranged to transmit ultrasound signals through a wall (1) of the monolithic polymer structure separating the through-going opening (2) and the cavity (6).

3. Consumption meter according to claim 2, wherein the wall (1) forms a substantially water-tight barrier between the through-going opening (2) and the cavity (6).

4. Consumption meter according to any of the preceding claims, wherein the monolithic polymer structure is shaped such that a space defined by the cavity (6) and a plane covering an opening of the cavity (6) houses the ultrasound transducer (8), the measurement circuit (9) and the calculation circuit (10).

5. Consumption meter according to any of the preceding claims, comprising a cover (142) arranged to fit to an opening to the cavity (106), such as a cover (142) with a transparent zone arranged in relation to a display (112) inside the cavity (106) so as to allow visible inspection of a consumed quantity from outside during normal operation.

6. Consumption meter according to claim 5, wherein the monolithic polymer structure is shaped such that the cavity (106) forms a substantially watertight enclosure together with the cover (142), wherein the ultrasound transducer (8), the measurement circuit (9), and the calculation circuit (10) are housed inside said enclosure, when mounted for normal operation, such as by means of a sealing material (144).

7. Consumption meter according to claim 5 or 6, wherein the monolithic polymer structure has a part of its surface shaped so as to engage with the cover (142) or another part (140), in order to lock the cover (142) in position onto the monolithic polymer structure, when mounted for normal operation.

8. Consumption meter according to any of the preceding claims, wherein moist inhibiting means is arranged inside the cavity (106), such as in the form of a material cast around at least part of the measurement circuit and/or the calculation circuit (111), or such as a moist inhibiting gas, or such as a moist absorbing gel.

9. Consumption meter according to any of the preceding claims, wherein the monolithic polymer structure has a protrusion or indention inside the through-going opening (202) serving to engage with a measurement tube element (222) or an ultrasound reflector arrangement (220).

10. Consumption meter according to any of the preceding claims, wherein both ends of the through-going opening (302) of the monolithic polymer structure (300) are arranged for connection to a piping system, such as both ends of the through-going opening having threaded portions (318), such as both ends of the through-going opening being shaped to engage with a metal part which is shaped for fitting to the piping system.

11. Consumption meter according to any of the preceding claims, wherein the cavity (106) further houses a display (112) arranged to display the consumed quantity.

12. Consumption meter according to any of the preceding claims, comprising a temperature sensor mounted so as to sense a temperature of the fluid inside the through-going opening, such as by means of a metal pocket cast into the monolithic polymer structure.

13. Consumption meter according to any of the preceding claims, wherein the cavity (106) further houses a Radio Frequency transmitter arranged to transmit a Radio Frequency signal with data representing the consumed quantity, such as a wireless Radio Frequency signal.

14. Consumption meter according to any of the preceding claims, wherein the monolithic polymer structure is shaped such that a part of the cavity (106) provides an elongated space along the through-going opening (102), and wherein at least one battery (119) for driving at least the measurement circuit and the calculation circuit (111) is arranged inside this elongated space.

15. Consumption meter according to any of the preceding claims, comprising a substantially watertight electrical connector arranged so as to establish electrical connection to the cavity from outside, such as through a wall of the monolithic polymer structure, such as through a cover covering an opening to the cavity, wherein the electrical connector is arranged for providing one or more of: an electric supply power to one or more electric power consuming elements arranged in the cavity, a data transfer between a circuit arranged in the cavity and outside the meter, such as the electrical connector being connected to the calculation circuit for communicating the consumed quantity.

16. Consumption meter according to any of the preceding claims, wherein the consumption meter is one of: a heat meter, a cooling meter, a water meter, and a gas meter.

17. Method of manufacturing a consumption meter arranged to measure a consumed quantity of a physical entity, such as an amount of water, the method comprising
- forming, such as casting, a monolithic polymer structure having a through-going opening and a cavity separated from the through-going opening,
- mounting in the cavity:
- at least one ultrasound transducer operationally connected to a measurement circuit so as to measure a flow rate, and
- a calculation circuit arranged to calculate the consumed quantity of the physical entity based on the flow rate.
